# EUROPÄISCHE PATENTSCHRIFT

(11) **EP 0 486 935 B1**
(45) Veröffentlichungstag und Bekanntmachung des Hinweises auf die Patenterteilung: **31.07.1996**
(21) Anmeldenummer: 91119366.2
(22) Anmeldetag: 13.11.1991
(51) Int. Cl.: G02B 6/44, H02G 15/08, H01R 9/05

(54) **Streckenverstärker-Vorrichtung**
Repeater amplifier device
Dispositif répéteur amplificateur

(30) Priorität: 23.11.1990 DE 4037337
(43) Veröffentlichungstag der Anmeldung: 27.05.1992
(73) Patentinhaber: KATHREIN-WERKE KG, D-83022 Rosenheim (DE)
(72) Erfinder: Margreiter, Hans, W-8201 Kirchdorf (DE); Staniszewski, Walter, W-8213 Aschau (DE)
(74) Vertreter: Flach, Dieter Rolf Paul, Dipl.-Phys.

(56) Entgegenhaltungen:
- EP-A- 0 246 961
- EP-A- 0 332 945
- EP-A- 0 386 635
- WO-A-90/13838
- DE-A- 3 116 869
- DE-A- 3 723 991

## Beschreibung

Die Erfindung betrifft eine Streckenverstärker-Vorrichtung nach dem Oberbegriff des Anspruches 1.

Streckenverstärker haben Bedeutung bei der Installation von Breitbandkommunikations-Netzen. In der Regel ist dabei ca. alle 400 m ein Verstärkerpunkt vorgesehen, bei dem die über das Koaxialkabel ausgesandten Sendefrequenzen verstärkt und in das bzw. die jeweils wieder ausgehenden Koaxialkabel eingespeist werden. Herkömmliche Streckenverstärker bestehen dabei aus einem mit einem Deckel verschließbaren wasserdichten Schutzgehäuse, in dessem Inneren die Verstärker-Elektronik untergebracht ist. In der Regel an der Unterseite sind die Anschlußbuchsen für das zumindest eine ankommende wie auch das zumindest eine abführende Koaxialkabel vorgesehen. Bei Bedarf können an dem Gehäuse auch weitere in der Regel ausgangsseitige Koaxialkabel zur Erzielung einer Abzweig- oder Verteilerfunktion angeschlossen werden.

Schließlich kann der Verstärker einen separaten Netzanschluß aufweisen oder aber über das Streckenkabel mit der notwendigen Betriebsspannung versorgt werden.

Die Streckenkabel werden häufig unterirdisch verlegt. In vielen Gegenden und Ländern jedoch erfolgt die Verlegung oberirdisch.

In der Praxis hat sich nunmehr gezeigt, daß natürlich derartige Streckenverstärker vor allem abhängig von deren Betriebsdauer Störungen unterliegen können und dann der alte Streckenverstärker abmontiert und ein neuer installiert werden muß. Soll beispielsweise die Frequenzbreite des Breitbandkommunikations-Netzes verbessert werden, so muß in der Regel ebenfalls der ältere Streckenverstärker abmontiert und durch eine neuen ersetzt werden.

In diesen Fällen aber erweist es sich als äußerst nachteilhaft, daß zum Abbau und zur Neumontage eines neuen Streckenverstärkers nach dem Öffnen des Deckels die durch Anschlußöffnung ins Innere hineingeführte Streckenkabel sauber abgeklemmt und dann bei der Montage die Kabelenden wieder neu in das Elektronikschutzgehäuse durch die Einlaßöffnung eingeführt und an der im Inneren befindlichen Elektronik angeschlossen werden müssen. Derartige Montagearbeiten vor Ort sind sehr aufwendig und zeitintensiv.

Dieses Grundproblem gilt gleichermaßen auch dann, wenn für die Kabel sog. Lichtwellenleiter oder ganze Bündel von Lichtwellenleiter verwandt werden. Denn auch hier muß das gebündete Lichtwellenleiterkabel ins Innere des Elektronikschutzgehäuses eingeführt und die Lichtwellenleiter-Kabelenden so vorbereitet werden, daß nach deren Anschluß an dem Streckenverstärker eine optisch/elektronische Signalumsetzung vom Eingangskabel herkommend und zum Ausgang hin wieder eine elektrisch/optische Umsetzung möglich wird, wenn die weitere Signalübertragung wieder über einen Lichtwellenleiter erfolgen soll.

Aufgabe der vorliegenden Erfindung ist es von daher, einen verbesserten Streckenverstärker zu schaffen, der problemlos demontiert und neu installiert werden kann, und der vor allem vom Grundprinzip her unabhängig davon verwandt werden kann, ob die Signalübertragung ganz oder teilweise über Koaxialkabel bzw. Lichtwellenleiter-Kabel erfolgen soll.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Durch die vorliegende Erfindung wird die Montagefreundlichkeit gegenüber herkömmlichen Lösungen über ein Vielfaches verbessert.

Erfindungsgemäß werden die eingehenden und abgehenden Kabel an einer fest montierbaren nachfolgend auch als Montagebasis bezeichneten Kabelinstallationseinheit angeschlossen. Davon getrennt ist in einem separaten Elektronikschutzgehäuse die Elektronik untergebracht. Zwischen dem Elektronikschutzgehäuse und der Kabelinstallationseinheit ist eine Schnittstelle vorgesehen, so daß das Elektronikschutzgehäuse über diese Schnittstelle lediglich an der Kabelinstallationseinheit aufgesteckt wird und zum Wechseln wieder abgezogen und durch eine neue ersetzt werden kann.

Je nach Bedarf können dabei mehrere eingehende oder abgehende Koaxialkabel angeschlossen werden. Dazu sind an der Kabelinstallationseinheit und an der Schnittstelle dann mehrere Anschlußverbindungen ausgebildet.

Diese Schnittstelle kann aber gleichermaßen auch für eingehende oder abgehende Lichtwellen-Leiter verwandt werden.

Aus der DE-A-37 23 991 ist eine koaxiale Abzweigungs-/Verteilervorrichtung bekannt geworden, mit einer fest montierbaren Kabelinstallationseinheit, an der die ankommenden und abgehenden Kabel fest installierbar sind, mit einem weiteren auswechselbaren Baustein zur Aufnahme von elektrischen Schaltkreisen und einer lösbaren Schnittstelle, worüber der auswechselbare Baustein mit der Kabelinstallationseinheit mechanisch verbindbar ist und die in dem auswechselbaren Baustein untergebrachten elektrischen Bauteile an die ankommenden und abgehenden Kabel elektrisch anschließbar sind. Es handelt sich dabei aber um ein anderes technisches Einsatzfeld, nämlich um eine Abzweig-/Verteilervorrichtung, wie sie an einem sog. Hausübergabepunkt eingesetzt wird.

Völlig andersartig sind die grundsätzlichen technischen Anforderungen und Spezifikationen insbesondere auch im Hinblick auf die Leistungsmerkmale der Elektronik sowie die Anschluß- und Dichtfunktion, die derartige beispielsweise oberirdisch montierte Streckenverstärker erfüllen müssen. Die vorliegende Erfindung ist dabei vor allem auch für den Fall bestimmt und geeignet, bei dem nur ein einziges koaxiales oder Lichtwellenleiterkabel zum Streckenverstärker hin und jeweils nur ein einziges koaxiales oder Lichtwellenleiterkabel wieder wegverläuft, ohne daß eine Abzweig- oder Verteilfunktion durchgeführt wird. Insoweit liegt die vorliegende Erfindung nicht nur auf einem anderen technischen Gebiet, sondern befaßt sich auch mit einer anderen Aufgabenstellung. Während sich nämlich die Vorveröffentlichung mit dem Problem befaßt, eine koaxiale Verbindungsvorrichtung, insbesondere eine koaxiale Abzweig-/Verteilervorrichtung zu schaffen, bei der mit äußerst einfachen Mitteln bei maximaler Bedienerfreundlichkeit eine Anpassung an die jeweils gewünschte aktuelle Zahl der angeschlossenen Verbraucher bzw. den Umfang der in Anspruch genommenen Programme und Serviceleistungen vorgenommen werden kann, befaßt sich die vorliegende Erfindung demgegenüber mit der Aufgabenstellung, den Abbau bzw. die Neumontage eines neuen Streckenverstärkers zu erleichtern.

In einer bevorzugten Ausführungsform der Erfindung kann die Montagebasis ferner noch eine Kammer für die Koaxial-kabel und/oder die Lichtwellenleiter umfassen. In dieser Kammer können die eingehenden und ausgehenden Kabel im Sinne einer Durchschaltung, einer Aufteilung und/oder Zusammenschaltung mit den an der Schnittstelle zum elektronischen Schutzgehäuse ausgebildeten Steckern verbunden sein.

Im Falle von Lichtwellenleitern bzw. Lichtwellenleiter-Bündeln kann diese Kammer als sog. Spleißkammer dienen, um die eingehenden und ausgehenden Lichtwellenleiter-Bündel mit entsprechenden Lichtwellenleiter-Spleißen zu verbinden, die zu den Lichtwellenleiter-Steckern an der Schnittstelle zum elektronischen Schutzgehäuse führen.

Diese Spleißkammern dienen zum anderen auch zur Zugentlastung und zur Herstellung einer verbesserten Dichtung zum eigentlichen Elektronikschutzgehäuse. Vor allem können hier andere Lichtwellenleiter mit kleineren Biegeradien angeschlossen werden, um den Übergang vom eigentlichen Lichtwellenleiter-Streckenkabel zu den intern verlegten Lichtwellenleitern zu verbessern. In der Spleißkammer kann zudem auch eine Faserreserve insoweit vorgesehen sein, als das das Lichtwellenleiter-Streckenkabel mehrfach gewunden verlegt ist, bevor dessen Ende in der Regel über die erwähnte Spleißverbindung mit Lichtwellenleiter-Anschlüssen verbunden ist.

Die erwähnte Kammer wird in der Regel durch die Kabelinstallationseinheit auch die Montagebasis selbst gebildet, kann aber auch als separates Bauteil ausgebildet sein, das über eine weitere Schnittstelle mit der Kabelinstallationseinheit verbindbar ist. Die Kammer kann dabei für alle eingehenden und ausgehenden Kabel gleichermaßen dient, gleich ob es sich um Koaxial- oder um Lichtwellenleiter-Kabel handelt. Möglich ist aber auch, daß die Kammer nur für einen Teil der Kabel vorgesehen ist.

Nachfolgend wird die Erfindung anhand von in Zeichnungen dargestellten Ausführungsbeispielen näher erläutert. Dabei zeigen im einzelnen:
- Figur 1 :: eine perspektivische Ansicht einer erfindungsgemäßen Streckenverstärker-Vorrichtung in demontiertem Zustand ohne die im Inneren des Gehäuses ansonsten vorgesehene Elektronik;
- Figur 2 :: eine Seitenansicht einer vertikalen Querschnittdardarstellung durch das Schutzgehäuse und eine zugehörige Kabelinstallationseinheit der Streckenverstärker-Vorrichtung;
- Figur 3 :: eine vergrößerte Detail-Wiedergabe der Schnittdarstellung gemäß der Figur 2;
- Figur 4 :: eine schematische Frontansicht bezüglich einer Abwandlung der erfindungsgemäßen Streckenverstärker-Vorrichtung;
- Figur 5 :: ein weiteres Ausführungsbeispiel in schematischer geschnittener Frontdarstellung;
- Figur 6 :: eine weitere Abwandlung eines erfindungsgemäßen Ausführungsbeispieles; und
- Figur 7 :: ein weiteres Ausführungsbeispiel der Erfindung.

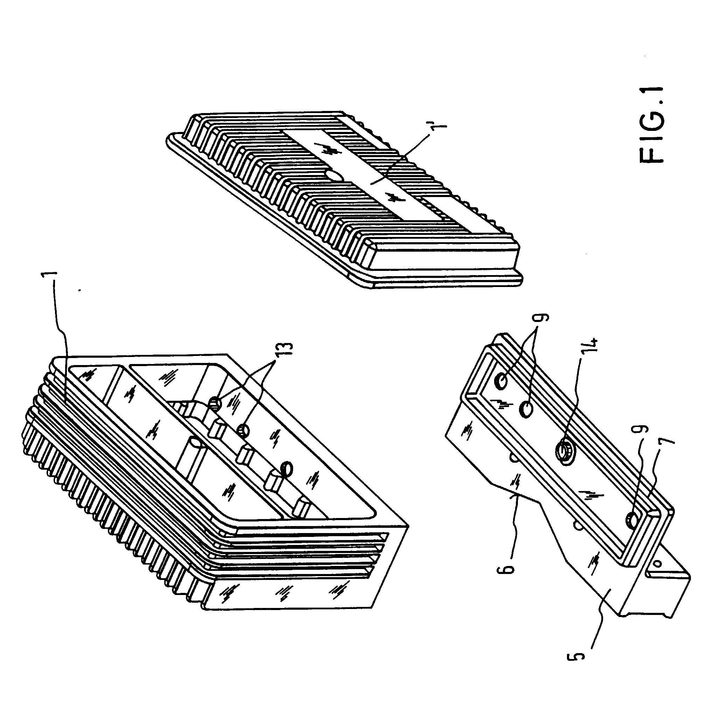

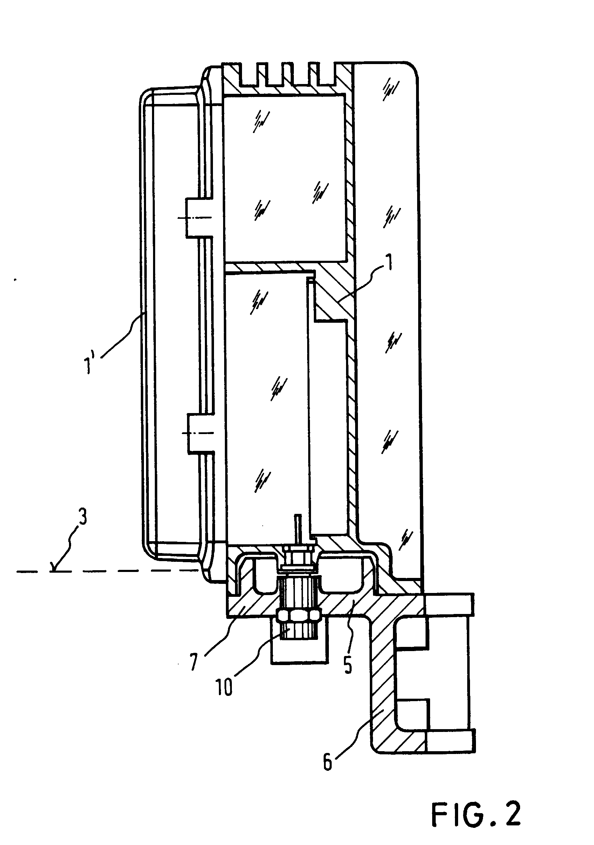

In den Figuren 1 bis 3 ist in schematischer Darstellung ein erstes Ausführungsbeispiel einer Streckenverstärker-Vorrichtung mit einem Elektronikschutzgehäuse 1 gezeigt, welches über eine Schnittstelle 3 auf einer Kabelinstallationseinheit 5, d.h. der Montagebasis 5 sitzend angeschlossen ist. Die Kabelinstallationseinheit 5 dient gleichzeitig als Montagebasis, die beispielsweise bei einer Überlandverkabelung an entsprechenden Masten, Wänden etc. oder bei unterirdischer Verkabelung beispielsweise in wieder zugänglichen Schächten fest anbringbar ist. Dazu dient ein Montageabschnitt 6.

Im gezeigten Ausführungsbeispiel sind an einem horizontal überstehenden Anschlußflansch 7 an der Montagebasis 5 entsprechend der Zahl der ankommenden und wieder abführenden Kabel Anschlußbohrungen 9 vorgesehen. Gegebenenfalls können weitere vorbereitete Anschlußstellen vorgesehen sein, die bei Bedarf problemlos aufgebohrt werden können.

In den Anschlußbohrungen 9 können herkömmliche Befestigungsbuchsen 10 angebracht sein, in welche entsprechend vorbereitete Enden, d.h. in der Regel mit einem Kabelendstecker versehene Koaxialkabel 12 beispielsweise mittels einer Mutter 11 mechanisch fest an der Kabelinstallationseinheit 5 angebracht werden können.

An der angrenzenden benachbarten Wand des Elektronikschutzgehäuses 1, im gezeigten Ausführungsbeispiel ebenfalls an der Unterseite, sind in Draufsicht deckungsgleich zu den Anschlußbohrungen 9 weitere Bohrungen 13 eingebracht, in denen ein Steckeinsatz 15 verankerbar ist, worüber beispielsweise der Innenleiter und Außenleiter eines eingesteckten Koaxial-Streckenkabels der im Inneren des Elektronikschutzgehäuses 1 vorgesehenen und im Ausführungsbeispiel nicht näher dargestellten Elektronik-Schaltung kontaktierbar ist.

Die elektrische Energieversorgung für die im Elektronikschutzgehäuse 1 vorgesehenen Verstärkerschaltungen kann entweder über das Koaxial-Streckenkabel oder über separate elektrische Anschlußleitungen zur Verfügung gestellt werden, die im Ausführungsbeispiel nicht näher dargestellt sind. Mittels eines Gehäusedeckels 1' läßt sich das Elektronikschutzgehäuse 1 dicht verschließen.

Sobald die Montagebasis 5 einmal fest montiert und die entsprechenden Streckenkabel 12 angeschlossen sind, muß beim Ausfall der Elektronik oder bei einam ansonsten durchzuführenden Wechsel der Elektronik, beispielsweise aufgrund einer Anpassung an eine ein größeres Frequenzspektrum abdeckende Breitband-Übertragung, lediglich das Elektronikschutzgehäuse 1 mit der inneren Elektronik durch Anheben abgesteckt und ein neues Schutzgehäuses 1 aufgesteckt werden. Ein Zeitintensiv und aufwendig vorzunehmender Neuanschluß der Streckenkabel ist nicht erforderlich. Vor allem bedarf es keiner Anschlußmontage von Kabeln 12 an die Elektronik bei geöffnetem Deckel 1'.

Lediglich als weitere Sicherungsmaßnahme kann beispielsweise durch nicht näher dargestellte Schraubelemente beispielsweise das Elektronik-Schutzgehäuse 1 an der Kabelinstallationseinheit 5 zusätzlich mechanisch gesichert sein (z. B. durch Eindrehen einer Schraube ins Gehäuse 1, und zwar über eine weitere Bohrung 14 im Flansch der Kabelinstallationseinheit.

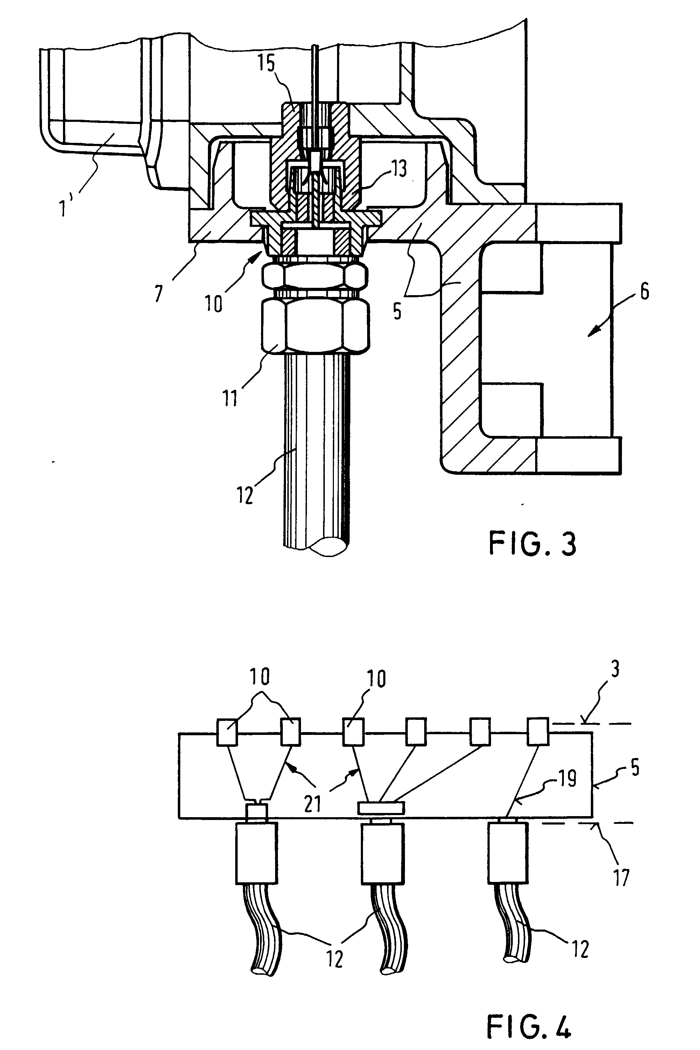

In Figur 4 ist in schematischer Darstellung eine Abwandlung zu dem Ausführungsbeispiel gemäß Figuren 1 bis 3 insoweit gezeigt, als hier die Kabelinstallationseinheit 5 eine weitere Schnittstelle 17 zum elektrischen Anschluß der Kabel 12 vorgesehen ist.

Die anhand der Figuren 1 bis 3 erläuterten Maßnahmen zum Anschluß der Kabel sind bei dem Ausführungsbeispiel nach Figur 4 auch an der in Figur 4 gezeigten unteren Schnittstelle 17 zur Montagebasis 5 vorgesehen und verwirklicht. Im Inneren der Kabelinstallationseinheit 5 können dann die einzelnen ankommenden wie abführenden Kabel entweder, wie in Figur 4 beispielsweise dargestellt ist, gemäß der Variante 19 durchgeschaltet oder beispielsweise gemäß Beispiel 21 verzweigt oder anderweitig elektrisch verbunden werden.

Aber selbst wenn die zweite Schnittstelle 17 als solche nicht vorgesehen und die Kabelenden ins Innere der als Gehäusebox ausgebildeten Kabelinstallationseinheit 5 hineingeführt werden, könnte eine dort spezifisch vorgesehene, an die konkreten Umstände angepaßte Schaltung u. a. auch gemäß der Variante 19 oder 21 vorgenommen werden.

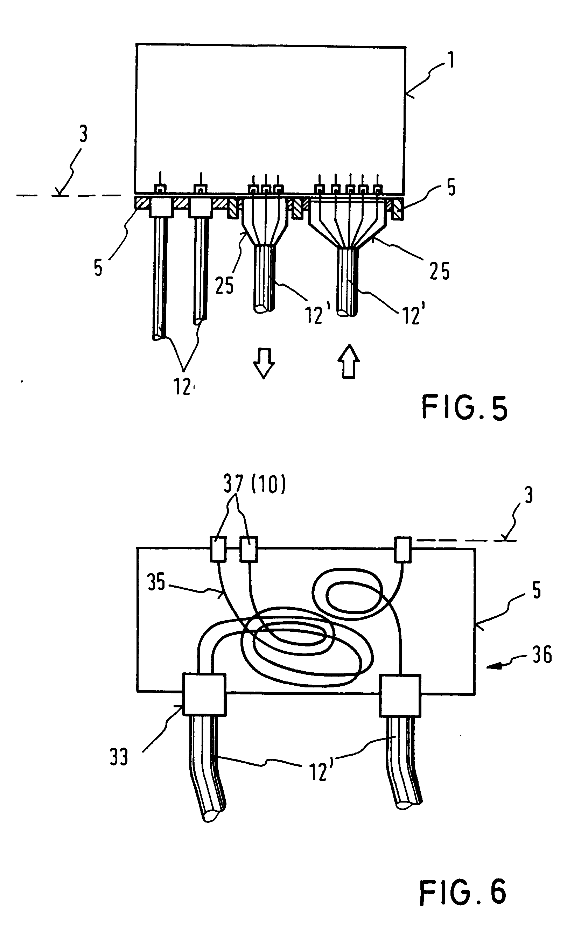

Anhand von Figur 5 wird nachfolgend verdeutlicht, daß die Strekkenverstärker-Vorrichtung grundsätzlich auch für Lichtwellenleiter 12' geeignet ist.

Lichtwellenleiter 12' umfassen dabei in der Regel nicht nur einen einzigen Lichtwellenleiter, sondern ein Bündel von Lichtwellenleiter. In Figur 5 ist dazu ein aus einem Bündel von Lichtwellenleiter 12' bestehendes ankommendes Kabel gezeigt, wobei die einzelnen Lichtwellenleiter mittels einer Steckeraufteilung vorbereitet sind. Mittels dieser einen Steckerkopf 25 darstellenden Steckeraufteilung kann das ankommende aus einem Bündel von Lichtwellenleitern 12' bestehenden Kabel an der Montagebasis 5 an der Schnittstelle 3 direkt aufgesteckt und angeschlossen werden.

Anhand des Ausführungsbeispieles gemäß Figur 5 soll verdeutlicht werden, daß ein abgehendes weiteres Kabel 12' in Form eines Bündels dreier Lichtwellenleiter angeschlossen ist, und zwar ebenfalls wieder über einen entsprechend abgestimmten Steckerkopf 25.

An der eigentlichen Schnittstelle 3 werden also bei den ankommenden wie abgehenden Lichtwellenleiter zur Überbrückung der Schnittstelle 3 optische Kopplungselemente und Stecker verwandt, wie sie an sich bekannt sind. Im Inneren des Elektronikschutzgehäuses 1 sind dann optische Empfänger und Umsetzer zur Umsetzung der optischen Lichtsignale in elektrische Signale vorgesehen.

In der Regel handelt es sich dabei um analoge Signale. Die über den Streckenverstärker dann verstärkten elektrischen Signale werden mittels ebenfalls in dem Elektronikschutzgehäuse 1 untergebrachten optischen Sender die elektrischen Verstärkersignale wieder in optische Lichtsignale umgesetzt, über die erwähnten optischen Steckverbindungen über die Schnittstelle weg in den Steckkopf 25 des abgehenden Lichtwellenleiter-Bündel übertragen und eingespeist.

Im gezeigten Ausführungsbeispiel ist auch gezeigt, daß beispielsweise darüber hinaus zwei koaxiale Kabel 12 ergänzend noch abgehen. Die in Figur 5 erläuterte Streckenverstärker-Vorrichtung dient also somit zum einen als Verstärker in einem Streckenkabel und gleichzeitig als Verzweiger oder Abzweiger von Koaxialkabel, die beispielsweise zu nahegelegenen Verbrauchern führen.

Figur 6 zeigt nunmehr eine weitere Abwandlung zu Figur 4 und 5 insoweit, als hier die Kabelinstallationseinheit oder Montagebasis 5 als Vor-Adapter-Stufe nach Art eines geschützten Gehäuses vorgesehen ist, welche als Spleißkammer dient.

Durch beispielsweise an der Unterseite vorgesehene und gedichtete Einführungsöffnungen 33 werden die beispielsweise aus einem Bündel von Lichtwellenleiter 12' bestehende Kabel eingeführt und mittels mit nicht näher gezeigten Spleißverbindungen mit kurzen weiteren Lichtwellenleiterstücken 35 verbunden, welche zu einem gemeinsamen oder einzelnen optischen Kupplungs- und Steckerelement 37 führen, die mit entsprechenden Kupplungs- und Steckerelementen in dem Elektronikschutzgehäuse 1 über die Schnittstelle 3 hinweg zusammengesteckt werden können. Durch die Spleißkammer 36 ergibt sich eine gewisse Faserreserve. Darüber kann auch eine Zugentlastung realisiert werden, wenn nämlich das eingehende als Streckenkabel dienende Lichtwellenleiter-Kabel 12' an der Kabelinstallationseinheit 5 mechanisch fest verankert wird. Im Ausführungsbeispiel gemäß Figur 6 ist ein ankommendes wie abgehendes Kabel 12' jeweils in Form eines Lichtwellenleiter-Bündels dargestellt.

Der Einfachheit halber ist in Figur 3 für die beiden Lichtwellenleiter-Bündel nur der Anschluß von zwei einzelnen bzw. einem einzigen Lichtwellenleiter dargestellt.

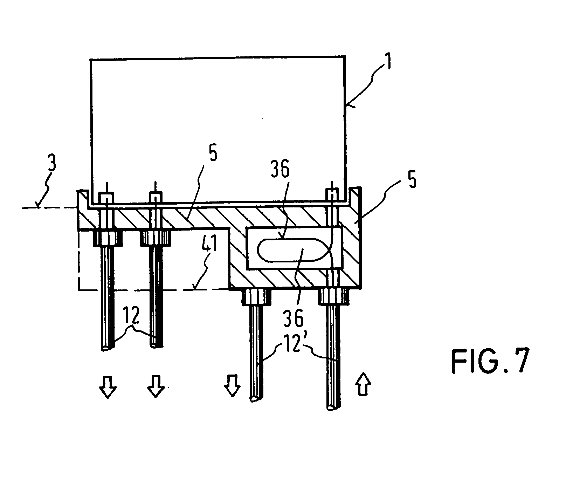

Anhand von Figur 7 ist nur verdeutlicht, daß auch Mischkombinationen für die Kabelinstallationseinheit 5 möglich sind, die beispielsweise eine Spleißkammer 36 für ankommende wie gegebenenfalls abgehende Lichtwellenleiter 12' und im übrigen nur einen entsprechenden Anschlußflansch 7 für die gegebenenfalls ankommenden wie weggehenden Koaxial-Kabel 12 umfaßt.

Natürlich kann aber die Montagebasis 5 insgesamt gehäuseförmig ausgebildet sein und als Kammer nicht nur die Spleißkammer 36, sondern eine entsprechende weitere Anschluß-Kammer 41 für die koaxialen Kabel 12 umfassen. Dies ist in Figur 7 strichliert angedeutet.

In dieser weiteren Kammer 41 können auch die koaxialen Kabel 12, wie anhand Figur 4 erläutert, durchgeschaltet, verzweigt oder nach sonstigen Bedürfnissen geschaltet und angeschlossen werden.

## Patentansprüche

1. Streckenverstärker-Vorrichtung, insbesondere für ein Breitband-Kommunikationsnetz, mit einer in einem Elektronikschutzgehäuse (1) untergebrachten Elektronik und zumindest einem Anschluß für ein eingehendes und zumindest einem Anschluß für ein ausgehendes Kabel (12), **gekennzeichnet durch** die folgenden Merkmale:
- es ist eine fest montierbare Montagebasis (5) vorgesehen, an der die ankommenden und abgehenden Kabel (12, 12') fest installierbar sind,
- die ankommenden und die abgehenden Kabel (12, 12') bestehen aus Lichtwellenleitern (12') und/oder Koaxialkabeln (12) und sind mit Endsteckern versehen,
- es ist ein von der Montagebasis (5) getrenntes Elektronikschutzgehäuse (1) zur Aufnahme der Elektronik vorgesehen,
- die Montagebasis (5) dient als Durchführungs- und/oder Verankerungsteil für die Endstecker der ankommenden und abgehenden Kabel (12, 12'),
- es ist eine lösbare Schnittstelle (3) bezüglich der mechanischen Verbindung zwischen Montagebasis (5) und Elektronikschutzgehäuse (1) und bezüglich der elektrischen und/oder optischen Kontaktierung der im Elektronikschutzgehäuse (1) untergebrachten Elektronik und den ankommenden und abgehenden Kabeln (12, 12') vorgesehen.

2. Streckenverstärker-Vorrichtung nach Anspruch 1, **dadurch gekennzeichnet**, daß die Schnittstelle (3) als Kopplungs- oder Steckverbindung ausgebildet ist.

3. Streckenverstärker-Vorrichtung nach Anspruch 1 oder 2, **dadurch gekennzeichnet,** daß die Montagebasis (5) einen horizontal überstehenden Anschlußflansch (7) aufweist, in welchem zumindest entsprechend der Zahl der ankommenden und wieder abführenden Kabel (12, 12') Anschlußbohrungen (9) vorgesehen sind.

4. Streckenverstärker-Vorrichtung nach einem der Ansprüche 1 bis 3, **dadurch gekennzeichnet**, daß in der Montagebasis (5) in dort vorgesehenen Anschlußbohrungen (9) für die ankommenden wie abführenden Kabel (12, 12') Befestigungsbuchsen (10) zur mechanischen Fixierung von an den Kabeln (12) angebrachten Kabelendsteckern montiert sind.

5. Streckenverstärker-Vorrichtung nach einem der Ansprüche 1 bis 4, **dadurch gekennzeichnet**, daß die Montagebasis (5) eine Kammer (41) für die Koaxialkabel (12) umfaßt, die durch die Kammer (41) hindurch verlegbar oder im Sinne einer Vorverdrahtung oder Eingangsschaltung entsprechend schaltbar sind.

6. Streckenverstärker-Vorrichtung nach einem der Ansprüche 1 bis 5, **dadurch gekennzeichnet**, daß die Montagebasis (5) eine Spleißkammer (36) für die Lichtwellenleiter (12') umfaßt.

## Claims

1. A repeater amplifier device, more especially for a wide band communication network, comprising electronic circuitry accommodated in an electronic circuitry housing (1) and at least one connection for an ingoing cable and at least one connection for an outgoing cable (12), characterized by the following features:
- a permanently fittable assembly base (5) is provided, on which the inlet and outlet cables (12 and 12') may be permanently installed,
- the inlet cables and the outlet cables (12 and 12') comprise light wave conductors (12') and/or coaxial cables (12) and are provided with end plugs,
- an electronic circuitry housing (1) is provided, which is separate from the assembly base (5), to receive the electronic circuitry,
- the assembly base (5) serves as a lead-through and/or anchoring part for the end plugs of the inlet and outlet cables (12 and 12') and
- a detachable interface (3) is provided with respect to the mechanical connection between the assembly base (5) and the electronic circuitry housing (1) and with respect to the electrical and/or optical contact making means for the electronic circuitry accommodated in the electronic circuitry housing (1) and to the inlet and outlet cables (12 and 12').

2. The repeater amplifier device as claimed in claim 1, characterized in that the interface (3) is designed in the form of a male or female plug coupling.

3. The repeater amplifier device as claimed in claim 1 or in claim 2, characterized in that the assembly base (5) possesses a horizontally projecting connection flange (7), in which connection holes (9) are provided at least in accordance with the number of the inlet cables and cables (12 and 12') to be returned.

4. The repeater amplifier device as claimed in any one of the claims 1 through 3, characterized in that in the assembly base (5) in connection holes (9) provided therein for the inlet cables and also for the cables to be returned (12 and 12') attachment bushings (10) are arranged for the mechanical attachment of cable plugs arranged on the cables (12).

5. The repeater amplifier device as claimed in any one the claims 1 through 4, characterized in that the assembly base (5) comprises a chamber (41) for the coaxial cables (12) which are able to be laid right through the chamber (41) or are able to be switched as a pre-wiring arrangement or input circuit.

6. The repeater amplifier device as claimed in any one the claims 1 through 5, characterized in that the assembly base (5) comprises a splicing chamber (36) for the light wave conductors (12').

## Revendications

1. Dispositif répéteur amplificateur, en particulier pour un réseau de communication à large bande, comportant une unité électronique logée dans un boîtier protecteur (1), et au moins un raccordement pour un câble rentrant (12) et au moins un raccordement pour un câble sortant (12), caractérisé en ce que :
- il est prévu une base de montage (5) susceptible d'être fixement montée, sur laquelle les câbles rentrants et sortants (12, 12') peuvent être fixement installés ;
- les câbles rentrants et sortants (12, 12') sont constitués par des guides d'ondes lumineuses (12') et/ou par des câbles coaxiaux (12) et sont pourvus de connecteurs d'extrémité ;
- il est prévu un boîtier protecteur (1) séparé par rapport à la base de montage (5) pour recevoir l'unité électronique ;
- la base de montage (5) sert de partie de passage et/ou d'ancrage pour les connecteurs d'extrémité des câbles rentrants et sortants (12, 12') ; et
- il est prévu une interface détachable (3) par rapport à la jonction mécanique entre la base de montage (5) et le boîtier protecteur (1) de l'unité électronique et par rapport au contact électrique et/ou optique de l'unité électronique logée dans le boîtier protecteur (1) et aux câbles rentrants et sortants (12, 12').

2. Dispositif répéteur amplificateur selon la revendication 1, caractérisé en ce que l'interface (3) est réalisée sous forme de liaison de couplage ou d'enfichage.

3. Dispositif répéteur amplificateur selon l'une ou l'autre des revendications 1 et 2, caractérisé en ce que la base de montage (5) présente une bride de raccordement (7) en dépassement horizontal dans laquelle sont prévus des perçages de raccordement (9) au moins en correspondance du nombre des câbles rentrants et sortants (12, 12').

4. Dispositif répéteur amplificateur selon l'une quelconque des revendications 1 à 3, caractérisé en ce que dans la base de montage (5), dans des perçages de raccordement (9) prévus dans celle-ci pour les câbles rentrants et sortants (12, 12'), sont montées des douilles de fixation (10) pour la fixation mécanique de connecteurs d'extrémité agencés sur les câbles (12).

5. Dispositif répéteur amplificateur selon l'une quelconque des revendications 1 à 4, caractérisé en ce que la base de montage (5) présente une chambre (41) pour les câbles coaxiaux (12) qui peuvent être posés à travers la chambre (41) ou qui peuvent être commutés en correspondance dans le sens d'un pré-câblage ou d'un circuit d'entrée.

6. Dispositif répéteur amplificateur selon l'une quelconque des revendications 1 à 5, caractérisé en ce que la base de montage (5) comporte une chambre d'épissure (36) pour les guides d'ondes lumineuses (12').
